(19) Europäisches Patentamt

European Patent Office

Office européen des brevets

(11) **EP 0 877 261 B1**

(12) **EUROPÄISCHE PATENTSCHRIFT**

(45) Veröffentlichungstag und Bekanntmachung des Hinweises auf die Patenterteilung:
**06.10.2004 Patentblatt 2004/41**

(51) Int Cl.⁷: **G01T 1/00**, G01T 1/185, G01T 1/02, G01T 1/17

(21) Anmeldenummer: **98890102.1**

(22) Anmeldetag: **08.04.1998**

(54) **PC basiertes Dosis/Dosisleistungsmesseinrichtung für ionisierende Strahlung**

PC based dose/doseratemeter for ionizing radiation

Dosimètre pour radiation ionisante basée sur ordinateur personnel

(84) Benannte Vertragsstaaten:
**DE GB SE**

(30) Priorität: **08.04.1997 AT 58997**

(43) Veröffentlichungstag der Anmeldung:
**11.11.1998 Patentblatt 1998/46**

(73) Patentinhaber: **Kugler, Werner**
**1130 Wien (AT)**

(72) Erfinder: **Kugler, Werner**
**1130 Wien (AT)**

(56) Entgegenhaltungen:
**US-A- 4 672 544**

**Beschreibung**

Die Erfindung betrifft eine Dosimetervorrichtung zur Messung ionisierender Strahlung, mit wenigstens einem Sensor, z.B. einer Ionisationskammer oder einem Festkörperdetektor, mit einer Meßelektronik mit einem mit dem Sensor verbundenen Verstärker-Eingangskreis für die Meßsignale, sowie mit einer Bedien- und Steuereinheit, einer Kalibriereinrichtung und einer Anzeigeeinrichtung.

In der Medizin wird ionisierende Strahlung einerseits zur Diagnostik, aufgrund der Fähigkeit, auch undurchsichtiges Material zu durchdringen, und andererseits zur Therapie bei Krebserkrankungen, aufgrund der zerstörerischen Wirkung auf lebendes Gewebe, verwendet. Wegen der Gewebe-schädigenden Wirkung ist aber eine genaue Kenntnis der jeweils applizierten Strahlungsdosis unerläßlich, wozu unter anderem umfangreiche Kontrollmessungen und Dokumentationen erforderlich sind. Ebenso ist im Strahlenschutz und im Umweltschutz eine genaue Messung einer eingestrahlten Dosis nötig. Die zu messende Größe ist die Energie, die die Strahlung in Materie deponiert. Geräte, die das unmittelbar zuwege bringen, nennt man Primärstandards. Aufgrund praktischer Erwägungen wird aber oft eine andere Größe, z.B. die Ladung, die die Strahlung in Materie freisetzt, gemessen. Dieser Wert wird dann mit einem Faktor, der durch Kalibrierung mit einem Primärstandard gewonnen wird, auf Energieeinheiten umgerechnet. Geräte, die dieses Prinzip verwenden, werden Sekundärstandards genannt, und ein solches Gerät liegt auch der vorliegenden Erfindung zugrunde.

Die auftretenden Ladungen sind sehr klein, sie liegen im Bereich einiger pC bis nC, und sie werden mit Operationsverstärkern mit vernachlässigbarem Eingangsstrom gemessen. Aus der gemessenen Ladung muß dann mit verschiedenen Parametern die deponierte Energie berechnet werden.

Die gebräuchlichen Meßvorrichtungen, Dosimeter genannt, bestehen aus einem Sensor, z.B. einem Festkörperdetektor, wie einem Halbleiter, oder einer Ionisationskammer, und aus der eigentlichen Meßelektronik, einer Anzeigeeinrichtung, Bedienelementen etc. und einem Verbindungskabel.

Findet als Sensor (Detektor) eine Ionisationskammer Verwenung, muß bei dieser eine Polarisationsspannung angelegt werden, um die gebildete Ladung abzusaugen. Ein Halbleiterdetektor fungiert als Stromquelle und bedarf nicht dieses Aufwandes.

Es ist nun Ziel der Erfindung, eine Dosimetervorrichtung wie vorstehend angegeben so zu gestalten, daß die erforderlichen Berechnungen, Kalibrierungen und Steuerungen sowie gegebenenfalls weitere Funktionen besonders einfach und rasch, insbesondere automatisiert, ausgeführt werden können.

Hierzu sieht die Erfindung vor, daß der Meßelektronik ein A/D-Wandler für die Meßsignale sowie ein D/A-Wandler für Einstellsignale als Schnittstelle zu einem Rechner zugeordnet sind und ein Rechner die Bedien- und Steuereinheit, die Kalibriereinrichtung und die Anzeigeeinrichtung bildet.

Bei der Erfindung handelt es sich somit um eine Dosimetervorrichtung, die auf einer bzw. mehreren Platine(n) nur die Elektronik beherbergt. Alle Einstellungen und Anzeigen können mittels eines Rechners, insbesondere eines handelsüblichen PCs, unter Verwendung von Bildschirm, Tastatur und gegebenenfalls Maus realisiert werden. Die Erfindung kann auf diese Weise die Messung ionisiender Strahlung durch Automatisierung der Meßabläufe vereinfachen. Nötige Korrekturen der Meßresultate können automatisch durch Zugriff auf gespeicherte Daten durchgeführt werden, und eine lückenlose Dokumentation der Meßwerte kann automatisch erfolgen. Dadurch kann der Anwender von Routinearbeit, wie Protokollierungen und Korrekturrechnungen, entlastet werden, und es wird eine Qualitätssicherung mit geringem Arbeitsaufwand ermöglicht.

Zur Überprüfung der ordnungsgemäßen Funktion der Meßeinrichtung und der Wandler, insbesondere des A/D-Wandlers, ist es günstig, wenn die Meßelektronik eine Referenzspannungsquelle enthält, deren Ausgang an den A/D-Wandler gelegt und durch den Rechner prüfbar ist. Wenn bei der Überprüfung der konvertierte Wert der Referenzspannung innerhalb eines bestimmten Intervals liegt, wird die jeweilige Messung vom Rechner akzeptiert, ansonsten wird eine Fehlermeldung abgegeben. Vorzugsweise wird dabei die Referenzspannungsquelle von einem eine Spannungsversorgung für die Meßelektronik bildenden Gleichspannungswandler gespeist. In diesem Fall wird auch der Gleichspannungswandler hinsichtlich seiner einwandfreien Funktion überprüft.

Zufolge der Verwendung des Rechners (PCs) ist es in besonders vorteilhafter Weise möglich, Umschaltungen zwischen verschiedenen Betriebsarten bei der Messung vorzunehmen, wobei dann automatisch die jeweils gültigen Parameter, Korrekturfaktoren usw. berücksichtigt werden können. Demgemäß ist eine vorteilhafte Ausführungsform der vorliegenden Dosimetervorrichtung dadurch gekennzeichnet, daß der Verstärker-Eingangskreis über den Rechner und gegebenenfalls den D/A-Wandler zwischen verschiedenen Betriebsarten umschaltbar ist.

Hierbei ist beispielsweise zur Ermittlung entweder der jeweiligen Strahlungsdosis oder aber der Dosisleistung im Falle der Verwendung von Ionisationskammern eine vorteilhafte Ausbildung dadurch gegeben, daß der durch einen Operationsverstärker gebildete Verstärker-Eingangskreis zwischen einer Ladungsmessungs-Betriebsart, in der eine Rückkopplung über einen Kondensator vorgesehen ist, und einer Strommessungs-Betriebsart, in der eine Rückkopplung über einen Widerstand vorgesehen ist, umschaltbar ist. Dabei ist eine weitere vorteilhafte Funktion insofern mit Hilfe der Ansteuerung durch den Rechner problemlos möglich, als in einer Nullstellung des Verstärker-Eingangskreises der Rückkopplungs-Kondensator zu seiner Entladung kurzschließbar ist.

Im Falle einer Ionisationskammer als Sensor ist es weiters möglich, im Eingang des Elektrometer-Operationsverstärkers (Verstärker-Eingangskreises) entweder "floating" mit der Polarisationsspannung zu betreiben oder aber den Eingang an Masse zu legen, wobei im letzteren Fall die Außenelektrode der Ionisationskammer hochohmig an der Polarisationsspannung liegt. Demgemäß ist es für die erfindungsgemäße Dosimetervorrichtung weiters von Vorteil, wenn wahlweise eine Polarisationsspannung eines Polarisationsspannungsgenerators oder Masse unter Ansteuerung durch den Rechner an den Operationsverstärker anlegbar ist. Dabei kann auch mit Vorteil vorgesehen werden, daß die Polarisationsspannung durch den Rechner über den D/A-Wandler einstellbar ist. Die so eingestellte Polarisatonsspannung kann nach einer Teilung, beispielsweise an einem Operationsverstärker, über den A/D-Wandler dem Rechner zur Anzeige bzw. für einen Istwert/Sollwert-Vergleich zugeführt werden.

Da Ionisationskammern sowohl mit positiver als auch mit negativer Polarisationsspannung betrieben werden, ist es weiters zweckmäßig, wenn der Ausgang des Polarisationsspannungsgenerators umpolbar ist.

Im Fall von Halbleiterdetektoren als Strahlungs-Sensor kann statt eines Elektrometer-Operationsverstärkers ein spezieller integrierter Schaltkreis verwendet werden, der einen kompletten Integrator bildet und auch verschiedene CMOS-Schalter enthält. In einem derartigen IC ist bereits eine kleine integrierende Kapazität eingebaut, und durch entsprechende Beschaltung der CMOS-Schalter kann dieser Integratorbaustein ebenfalls für verschiedene Funktionen bzw. Betriebsarten verwendet werden. Insbesondere kann der Integratorbaustein bzw. der durch ihn gebildete Verstärker-Eingangskreis als Ladungs/Spannungs-Wandler oder aber als Strom/Spannungs-Wandler geschaltet werden. Hierbei ist es weiters denkbar, die jeweilige Wandlerfunktion mit nur einem Konversionsfaktor oder aber mit mehreren (zwei) Konversionsfaktoren zu realisieren. Auch ist es möglich, durch entsprechende Bestückung und Beschaltung des Integratorbausteines diesen sowohl zur Ladungs- als auch zur Strommessung einzusetzen, so daß je nach Wahl eine Dosis- oder Dosisleistungs-Messung durchführbar ist.

Zweckmäßigerweise können die Meßdaten über den Rechner anhand von Umwelt-Daten, wie Luftdruck, Temperatur und dergl., automatisch korrigiert werden. Zur Erfassung der Umwelt-Daten können gesonderte Sensoren, wie Temperaturfühler, Druckfühler usw., vorgesehen werden, deren Ausgangssignale (in digitalisiertem) Zustand dem Rechner zugeführt werden.

Ein weiterer Vorteil der vorliegenden Dosimetervorrichtung ist, daß mit dem Rechner bzw. PC ein ausreichendes Speichermedium von vornherein zur Verfügung steht, so daß ein Speicher definiert ist, um Daten, die den Strahlungs-Sensor betreffen, und die bei der Meßwertermittlung abrufbar bzw. berücksichtigbar sind, wie z.B. die Empfindlichkeit, Polarisationsspannung usw., gespeichert werden können. Damit und mit der Meßwert-Speicherung ist eine umfassende Dokumentation mögich, wobei im gegebenen Fall auf gespeicherte Daten, etwa zur Korrektur von Meßwerten, zurückgegriffen werden kann. Die ermittelten Meßwerte können ferner für die gewüschte Dokumentation völlig automatisch laufend gespeichert werden.

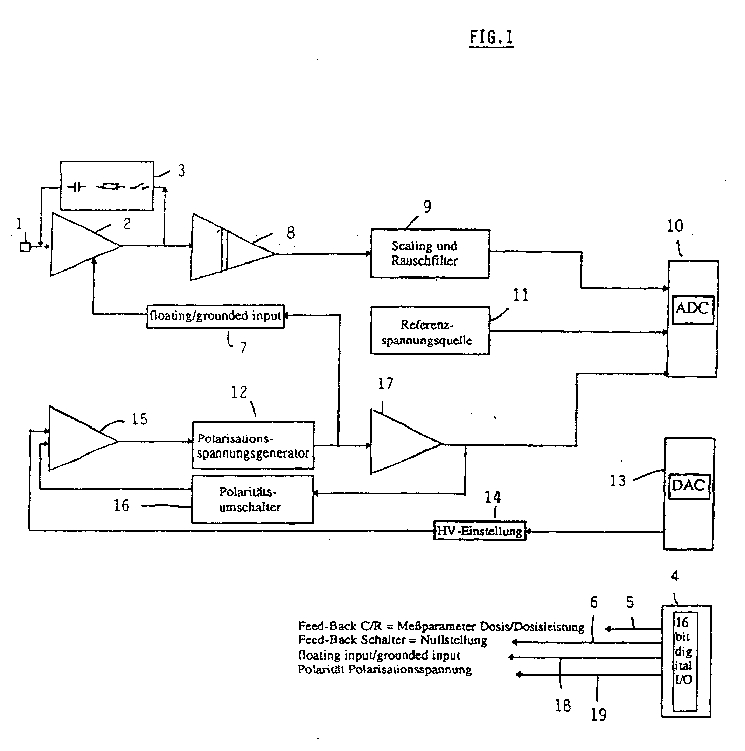

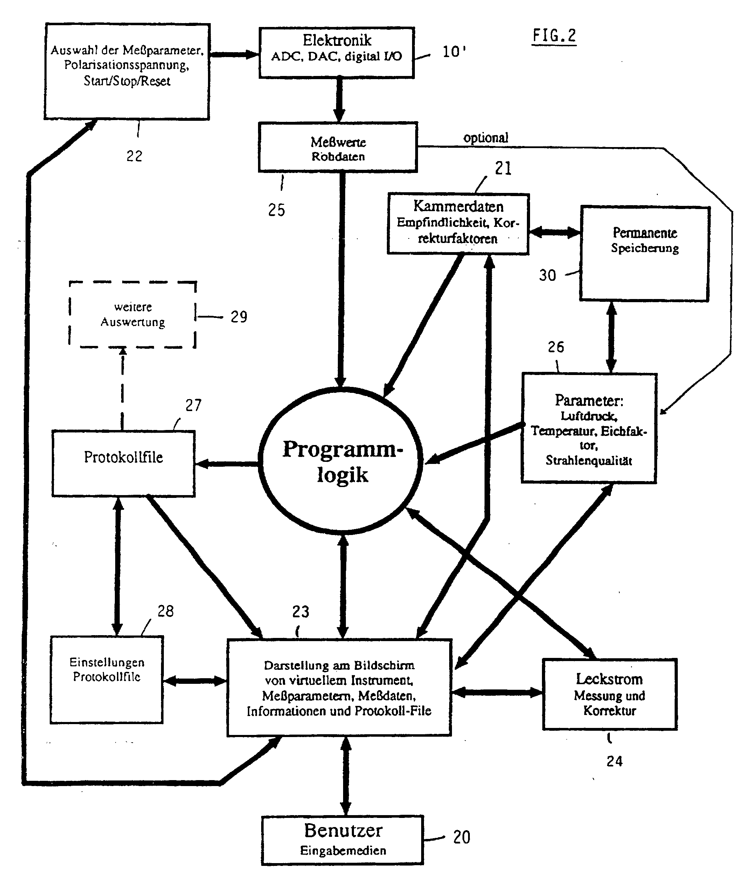

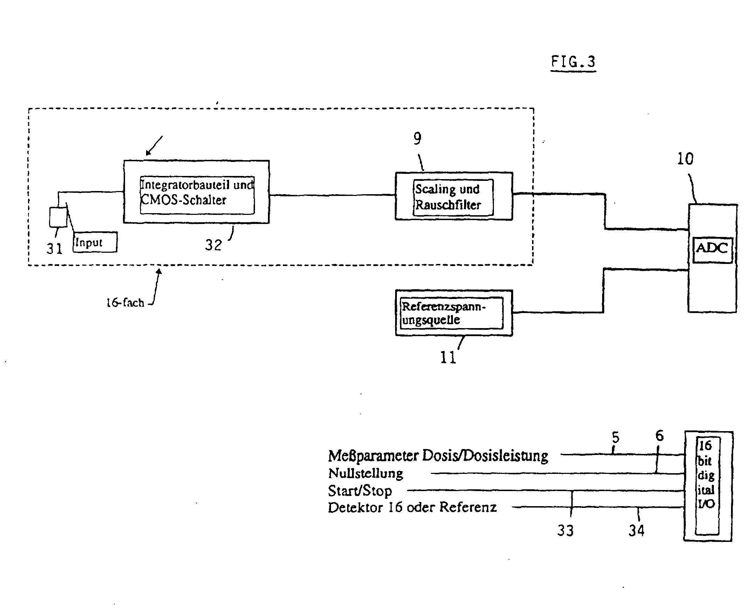

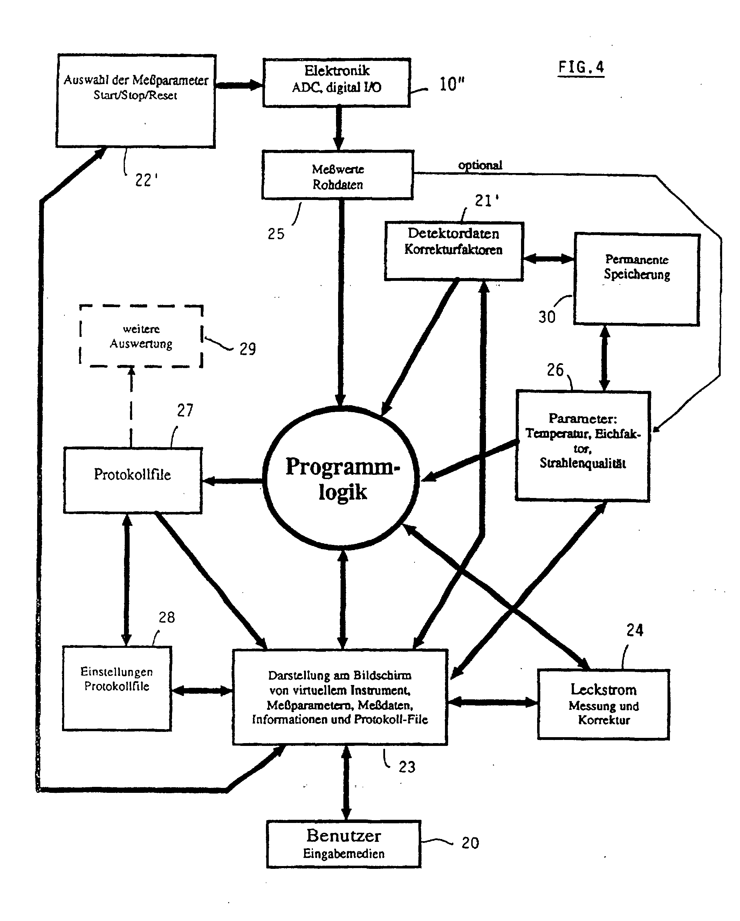

Die Erfindung wird nachstehend anhand von in der Zeichnung schematisch veranschaulichten, bevorzugten Ausführungsbeispielen, auf die sie jedoch nicht beschränkt sein soll, noch weiter erläutert. Im einzelnen zeigen in der Zeichnung: Fig.1 ein Blockschaltbild einer Dosimetervorrichtung, die mit einer Ionisationskammer als Strahlungs-Sensor arbeitet; Fig.2 ein Schema zur Veranschaulichung der mit Hilfe des Rechners und der vorgesehenen Programmlogik möglichen Abläufe bei Meßvorgängen mit der Vorrichtung gemäß Fig.1; Fig.3 ein schematisches Blockschaltbild einer Dosimetervorrichtung in Verbindung mit Halbleiter-Strahlungs-Sensoren; und Fig.4 wiederum ein Schema zur Erläuterung der durch den Rechner bzw. die zugehörige Programmlogik gesteuerten Meßvorgangs-Abläufe in Verbindung mit einer Vorrichtung gemäß Fig.3.

Fig.1 zeigt ein Blockschaltbild der Meßelektronik der Dosimetervorrichtungen, d.h. ohne Rechner (PC), wobei an sich zwei Meßkanäle vorgesehen sind; da aber beide Kanäle identisch aufgebaut sind, werden die Vorrichtung und ihre Funktion nur an einem Kanal erläutert.

Sowohl die Strahlungsdosis (entspricht einer Ladungsmenge) als auch die die Dosisleistung (entspricht einem Strom) sind Meßwerte, die in der Strahlen-Dosimetrie relevant sind. Der Eingangskreis, an den der Detektor - hier eine Ionisationskammer 1 - angekoppelt wird, ist ein Elektrometer-Operationsverstärker 2, der mit einer Kapazität (für eine Ladungsmessung) oder mit einem hochohmigen Widerstand (für eine Strommessung) rückgekoppelt wird, wie dies schematisch im Rückkopplungszweig bei 3 angedeutet ist. Aufgesammelte Ladung bzw. fließender Strom werden durch entsprechende Beschaltung des Elektrometer-Operationsverstärkers 2 in eine entsprechende Spannung umgesetzt. Über nicht näher dargestellte Relais-Schalter können die Funktionen Ladungsmessung, Strommessung und Nullstellung (Entladung der Kapazität) gesteuert werden; dies ist auch in Fig.1 rechts unten schematisch bei 4 bzw. mit den Schaltsignalen 5, 6 angedeutet.

In Meßvorrichtungen, die mit Ionisationskammern 1 arbeiten, wird der Eingang des Elektrometer-Operationsverstärker 2 zumeist "floating" mit der Polarisationsspannung betrieben. Dies hat den Vorteil, daß die Außenhülle der Ionisationskammer 1 auf Masse gelegt werden kann und dadurch ihre volle Abschirmwirkung gegen Störungseinflüsse besitzt. Ältere Konzepte arbeiten mit einem an Masse gelegten Eingang, wobei die Außenelektrode der Ionisationskammer hochohmig an der Polarisationsspannung liegt und demzufolge keine Schirmwirkung eintritt. Der vorliegende Elektrometer-Operationsverstärker 2 beherrscht durch einen Schaltkreis 7 mit einem Umschaltrelais beide Betriebsmodi ("floating input"/"grounded input"). Bei "floating input" setzt der Ausgang des Elektrometer-Operationsverstärkers 2 auf der Polarisationsspannung auf, da die weitere Signalbehandlung aber auf "analog ground" erfolgen muß, ist eine Potentialtrennung mittels eines - an sich bekannten - Isolationsverstärkers 8 nötig, der dann das Signal 1:1 auf Erdpotential bringt. In der Betriebsart "grounded input" ist der Isolationsverstärker 8 funktionslos, und das Signal wird unverändert weitergegeben.

Die Skalierung des erhaltenen Signals erfolgt mittels eines, z.B. einen Operationsverstärker und Widerstände enthaltenden Skalier- und Filter-Schaltkreises 9. Das Rauschen, das allen hochempfindlichen Schaltungen eigen ist, wird dabei z.B. mittels eines RC-Filters durch Integration (nicht gezeigt) gedämpft. Der Ausgang des Schaltkreises 9 führt dann zu einem Analog/Digital-Wandler (ADC) 10. Die vom ADC 10 gelieferten Daten werden durch eine in einem daran angeschlossenen, in der Zeichnung nicht dargestellten PC laufende Software korrigiert (Luftdruck, Temperatur, Eichfaktoren, Empfindlichkeit, Strahlenqualität) und zur Anzeige gebracht. Umweltparameter, wie Temperatur und Luftdruck, können gegebenenfalls mittels elektronischer Sensoren (nicht gezeigt) gemessen werden und ebenfalls über den ADC 10 dem Rechner zugeführt werden.

Um die ordnungsgemäße Funktion der so weit beschriebenen Meßeinrichtung und des ADC 10 zu überprüfen, findet eine Referenzspannungsquelle 11 Verwendung, wobei die Referenzspannung ebenfalls dem ADC 10 zugeführt wird. Nur wenn die Konversion dieser Referenzspannung bei der Prüfung im angeschlossenen PC innerhalb eines bestimmten Intervalls liegt, wird die Messung akzeptiert, ansonsten wird eine Fehlermeldung ausgegeben. Da die Referenzspannung aus einem Gleichspannungswandler (DC/DC Converter) (nicht gezeigt) gespeist wird, der auch große Teile der Schaltung versorgt, wird dessen einwandfreie Funktion ebenfalls überprüft.

Zur Erzeugung der Polarisationsspannung für die Ionisationskammer ist ein Polarisationsspannunsgenerator 12 vorgesehen, der beispielsweise durch einen Oszillator mit nachfolgender Greinacherschaltung gebildet sein kann. Diese Spannung soll stabilisiert und über den Rechner digital einstellbar sein; hierfür ist ein D/A-Wandler (DAC) 13 vorgesehen, dem eine Hochspannungs-Einstellstufe 14 sowie ein zur Ansteuerung und Stromversorgung des Polarisationsspannungsgenerators 12 vorgesehener Operationsverstärker 15 nachgeschaltet sind, wobei letzterem weiters ein Polarisations-Umschalter 16 zugeordnet ist.

Die Spannungsversorgung des Oszillators im Generator 12 wird über den Operationsverstärker 15 geregelt. Dieser wird einerseits - über den Umschalter 16 - aus einem Referenzverstärker 17, der die Hochspannung im Verhältnis 100:1 abschwächt (500 Volt Hochspannung ergeben 5 Volt an der Vergleichsstufe), und andererseits - über die Einstellstufe 14 - aus dem Ausgangssignal des DAC 13 gespeist. Die Einstellung des DACs 13 erfolgt durch den Rechner. Durch diesen Vergleich (im Rechner) zwischen dem Ausgang des DACs 13 und der Spannung am Referenzverstärker 17 wird die Hochspannung geregelt.

Da Ionisationskammern sowohl mit positiver als auch mit negativer Polarisationsspannung betrieben werden, ist die Hochspannung am Ausgang der Greinacherschaltung mittels eines Relais umpolbar. Demzufolge muß auch die Polarität des Referenzsignals im Operationsverstärker 15 gewendet werden. Der als MOS-FET-Schalter ausgeführte Umschalter 16 dient dazu, bei Umpolung der Polarisationsspannung durch das Relais dem Operationsverstärker 15 wieder ein Signal richtiger Polarität zuzuführen.

Um die einwandfreie Funktion und den tatsächlichen Wert der Polarisationsspannung zu messen, wird das Ausgangssignal des Referenzverstärkers 17 auf einen Eingang des ADC 10 geführt und über den Rechner (PC) als Polarisationsspannung zur Anzeige gebracht.

Zur Steuerung der einzelnen Relais und des MOS-FET-Schalters 16 werden einige digitale I/O Kanäle benötigt, wie die bereits erwähnten Kanäle 5, 6 sowie die Kanäle 18, 19 für die Umschaltung zwischen "floating input" und "grounded input" sowie für die Umschaltung der Polarität. Alle Relaiseinstellungen werden über den Rechner bzw. die Software gesteuert. Zu bemerken ist, daß einige Relais ebenfalls mit der Polarisationsspannung floaten und daher galvanisch getrennt über Optokoppler aus dem DC/DC-Converter gespeist werden (nicht gezeigt).

Als Rechner (nicht gezeigt) wird ein handelsüblicher PC verwendet, der mit der oben beschriebenen Hardware verbunden ist, und der mit der erforderlichen Software ausgestattet ist. Sie wird über Tastatur und Maus gesteuert und verfügt über eine graphische Benutzeroberfläche. Das Konzept der Software ist in Fig. 2 schematisch dargestellt.

Gemäß dem Schema von Fig.2 wählt der Benützer (bei 20) eine Ionisationskammer aus, die dazugehörigen Werte wie Korrekturfaktoren und erforderliche Polarisationsspannung werden aus einer Datenbank gelesen (Block 21 und 22) und gegebenenfalls am Bildschirm angezeigt (Block 23). Eine Messung des Leckstroms kann durchgeführt werden (Block 24). Die Art der Messung (Strom oder Ladung) wird selektiert, eine Zeitdauer eingegeben und die Messung gestartet.

Im Zuge eines solchen Meßvorganges wird als erstes ein Reset durchgeführt (Entladung des Kondensators in der Rückkopplung 3), dann werden die Relais der Meßart entsprechend angesteuert (Block 22).

- Die ADC-Karte (A/D-Wandler 10 in Fig.14); Block 10' in Fig.2) wird ausgelesen, der Wert in Volt umgerechnet (vgl. Block 25 in Fig.2).
- Je nach Meßart gilt Q=C.U bzw. i=R.U.
- Der vorher ermittelte Leckstrom wird abgezogen (s. Block 24).
- Dann wird mit der Empfindlichkeit und dem Korrekturfaktor der jeweiligen Ionisationskammer multipliziert (s. Block 21).
- Bei Ionisationskammern erfolgt eine Korrektur des Meßwertes X bezüglich Luftdruck (Press) und Temperatur (Temp) gemäß der Beziehung

$$X_{corr}=X. \frac{Temp_{Messung}}{Temp_{Kalibrierung}} \cdot \frac{Press_{Kalibrierung}}{Press_{Messung}}$$

(s. auch Block 26 in Fig.2)
- Dieser korrigierte Meßwert $X_{corr}$ wird am Bildschirm des PC angezeigt (Block 23) und je nach Einstellung permanent in einer Protokolldatei gespeichert (Block 27).

Erfolgt keine Unterbrechung durch den Benützer, wiederholt sich dieser Vorgang bis zur eingestellten Abbruchbedingung (Zeit bzw. Dosis).

Bei Durchführung einer Leckstrommessung wird ein Reset durchgeführt. Die Relais schalten den Operationsverstärker 2 auf Ladungsmessung.

- Die ADC Karte wird ausgelesen, der Wert in Volt umgerechnet.
- Es gilt Q=C.U.
- Leckstrom=Q/T (T=Zeit)
- Dieser Meßwert wird am Bildschirm angezeigt und, falls die Option aktiviert ist, permanent in einer Protokolldatei gespeichert (s. Block 27).

Erfolgt keine Unterbrechung durch den Benützer, wiederholt sich dieser Vorgang bis zur eingestellten Abbruchbedingung (Zeit bzw. Ladung).

Der Benutzer hat die Möglichkeit, alle Meßwerte (korrigiert und unkorrigiert), Parameter (Kammerdaten, Umweltdaten), Zeit, Dauer und Art der Messung automatisch in der Protokolldatei speichern zu lassen. Das Format dieser Datei ist so gestaltet (die Einstellung ist über Block 28 möglich), daß sie'mit fremder Software leicht gelesen werden kann. So kann z.B. mit einer Standard-Tabellenkalkulation eine weitere Auswertung der Messungen erfolgen (s. Block 29).

Der Benutzer hat im übrigen die Möglichkeit, Leckstrom, Temperatur, Luftdruck, Polarisationsspannung und andere Einstellungen manuell vorzunehmen. Unrealistische Eingaben werden zurückgewiesen. So wird eine Fehlbedienung weitgehend ausgeschlossen. Ferner können die Kammerdaten sowie Parameter, wie Eichfaktor, permanent gespeichert werden; wie in Fig.2 bei 30 angedeutet ist.

Die Funktionstüchtigkeit der Elektronik wird laufend durch Überprüfen der Referenzspannung verifiziert (s. Pos. 11 in Fig.1).

Eine spezielle "Kammer" ist vordefiniert: Ihre Empfindlichkeit beträgt 1, d.h. mit dieser Auswahl wird Ladung und Strom in C bzw. A gemessen und auch in diesen Dimensionen am Bildschirm ausgewiesen.

Fig.3 zeigt ein Blockschaltbild der Elektronik im Fall von Halbleiterdetektoren 31. Sie weist sechzehn Kanäle auf, da aber alle identisch aufgebaut sind, werden nachfolgend der Aufbau und die Funktion nur an einem Kanal erläutert.

Statt des Elektrometer-Operationsverstärkers 2 gemäß Fig.1 wird nun ein Spezial-Integratorbaustein (IC) 32 verwendet, der einen kompletten Integrator bildet und auch diverse CMOS-Schalter enthält. Eine geringfügige integrierende Kapazität ist bereits im IC 32 integriert. Durch entsprechende Beschaltung der CMOS-Schalter läßt sich der Integrator 32 für verschiedene Zwecke verwenden, und es können folgende Varianten damit aufgebaut werden:

(1) Q/U-Wandler mit zwei Konversionsfaktoren

Für die Integration kleiner Ladungen wird der im IC 32 eingebauten Kapazität ($C_{internal}$=100 pF) eine größere Kapazität (10 - 30 nF) mit Hilfe eines der CMOS-Schalter parallel geschaltet.

Für die Integration großer Ladungen wird durch einen anderen CMOS-Schalter eine wesentlich größere Kapazität (1µF) parallel geschaltet, so daß die zu integrierende Ladung entsprechend größer wird.

(2) Q/U-Wandler mit einem Konversionsfaktor

In diesem Falle steht einer der beiden vorgenannten CMOS-Schalter für andere Anwendungen zur Verfügung, da keine zweite Kapazität zur Integration größerer (oder kleinerer) Ladungen zugeschaltet werden muß. Der eine CMOS-Schalter kann dann zur Isolation des Einganges verwendet werden, so daß kein Strom in den Integrator 32 fließt, bevor dieser CMOS-Schalter geschlossen wird.

Alternativ kann der andere CMOS-Schalter für eine durch Logiksignale gesteuerte Abfrage des analogen Ausgangssignals verwendet werden.

(3) i/U-Wandler mit zwei Konversionsfaktoren

Ersetzt man die vorstehend unter (1) beschriebenen Kapazitäten durch Widerstände, so erhält man einen i/U-Wandler mit zwei analogen Ausgangsbereichen. Die im IC 32 eingebaute Kapazität dient der Bandbreitenbegrenzung und somit der Rauschunterdrükkung. Es kann dieser noch eine externe Kapazität zwecks weiterer Bandbreitenbegrenzung zugeschaltet werden.

(4) i/U-Wandler mit einem Konversionsfaktor

Hier wird kein zweiter Widerstand parallel geschaltet, und es gilt für die Verwendung CMOS-Schalter das vorstehend unter (2) Gesagte.

(5) Gemischte Verwendung als Q/U- und i/U-Wandler

Indem für die Schaltung eine gemischte Bestückung mit Kapazität und Widerstand verwendet wird, wobei diese Komponenten durch die CMOS-Schalter als Feedback geschaltet werden, ist sowohl eine Ladungs- als auch eine Strommessung möglich. Auf diese Weise erhält man für jeden Kanal wahlweise eine Dosisoder Dosisleistungsmessung.

Ein Schaltkreis 9 (Operationsverstärker) dient wiederum als Filter zur Rauschunterdrückung und als Skalierverstärker, um den dynamsichen Bereich des Integrators 32 voll auszuschöpfen und damit die Genauigkeit des analogen Ausgangssignals zu optimieren. Der analoge Ausgang des Verstärkers wird wiederum dem ADC 10 zugeführt. Der ADC 10 verwandelt den analogen Meßwert in einen digitalen Wert.

Die obige Beschreibung geht von 16 Kanälen aus, da der verwendete ADC 10 16 Kanäle unterstützt. Unter Verwendung eines ADC mit höherer Kanalzahl des Input-Multiplexers (es gibt gegenwärtig am Markt Multiplexer mit bis zu 256 Kanälen) kann die Kanalzahl natürlich größer sein.

Um die ordnungsgemäße Funktion der Meßeinrichtung und des ADC 10 zu überprüfen, wird wiederum eine Referenzspannungsquelle 11 mit 4,5 V Ausgangspannung verwendet, die ebenfalls dem ADC 10 zugeführt werden kann. Man kann wahlweise auf den Kanal für den Sensor Nr. 16 verzichten und an dessen Stelle die Referenzspannung dem ADC 10 zuführen. Die Konversion dieser 4,5 V wird vom Rechner überprüft. Da die Referenzquelle 11 aus dem DC/DC Converter gespeist wird, wird auch dessen einwandfreie Funktion überprüft. Die Auswahl, ob man nun den Meßwert des 16. Kanals oder ein Referenzsignal messen will, geschieht für die vorstehende Variante (5) mittels des Rechners, der einen CMOS-Schalter entsprechend umschaltet, s. auch den Kanal 34 in Fig.3.

Da jeder Integrator 32 bis zu vier digitale Steuerleitungen benötigt, würden 16 Kanäle 64 digitale I/O Signale benötigen. In der praktisch ausgeführten Variante, gemischte Verwendung (5), werden jeweils vier Integratoren zu einer Gruppe zusammengefaßt, so daß man mit 16 I/O Kanälen das Auslangen findet. Dadurch erreicht man trotzdem eine große Felxibilität, da verschiedene Integratorgruppen mit verschiedener Empfindlichkeit, unterschiedlicher Meßzeit, wählbaren Meßparametern und individueller Nullstellung arbeiten können.

Das die Mögichkeiten bei den Meßvorgängen erläuternde Programmlogik-Schema gemäß Fig.4 entspricht weitestgehend jenem von Fig.2, wobei für entsprechende Blöcke auch entsprechende Bezugszeichen verwendet wurden; soweit Übereinstimmung gegeben ist, kann sich eine neuerliche Beschreibung der einzelnen Vorgänge erübrigen.

Für eine Messung wählt (s. Block 20) der Benützer einen Detektor aus (Blöcke 22', 10"), die dazugehörigen Werte, wie z.B. Korrekturfaktoren, werden aus einer Datenbank gelesen (Block 21'). Auch kann wieder eine Messung des Leckstroms (Block 24) durchgeführt werden. Die Art der Messung (Strom oder Ladung) wird selektiert, eie Zeitdauer für die Messung eingegeben und die Messung gestartet (Block 22'). Nach diesem Start der Messung (s. auch Kanal 33 in Fig.3) wird ebenfalls als erstes ein Reset durchgeführt, um den Kondensator zu entladen (Block 22'), und dann werden die CMOS-Schalter des ICs 32 der Meßart entsprechend angesteuert. Sodann werden die Meßwerte an der ADC-Karte ausgelesen und in Volt umgerechnet (Blöcke 10", 25); dabei gilt je nachdem, ob die Dosis oder die Dosisleitung gemessen wird, wiederum die Beziehung Q=C.U bzw. i=R.U. Ein etwaiger vorher ermittelter Leckstrom wird vom ermittelten Wert abgezogen, und dann wird mit dem Korrekturfaktor des Detektors multipliziert. Weitere Daten, wie Temperatur, können ebenfalls in eine Korrektur des Meßwertes einfließen.

Der so korrigierte Meßwert wird dann am Bildschirm des PCs angezeigt und je nach Einstellung permanent in der Protokolldatei gespeichert (Block 27).

Erfolgt keine Unterbrechung des Meßvorganges durch den Benützer, so wiederholt sich dieser Vorgang, gesteuert durch die Programmlogik, wiederum bis zur eingestellten Abbruchbedingung (Zeit bzw. Dosis).

Im Falle einer Leckstrommessung ist im Unterschied zur Ausführungsform gemäß Fig.1 und 2 nur festzuhalten, daß anstatt über die Relais-Umschalter über die CMOS-Schalter des Integratorbauteils 32 letzterer auf Ladungsmessung umgestellt wird.

**Patentansprüche**

1. Dosimetervorrichtung zur Messung ionisierender Strahlung mit wenigstens einem Sensor (1), in Form einer Ionisationskammer oder eines Festkörperdetektors, mit einer Meßelektronik mit einem mit dem Sensor verbundenen Verstärker-Eingangskreis (2) samt Feed Back Elementen (3) für die Meßsignale, sowie mit einer Bedien-und Steuereinheit, einer Kalibriereinrichtung und einer Anzeigeeinrichtung, **dadurch gekennzeichnet, daß** dieses Dosimeter zusammen mit einem Rechner und der nötigen Software als virtuelles Instrument betriebsfähig ist, und diese Realisierung ermöglicht, wobei das Dosimeter einen AD-Wandler (10) samt Multiplexer nicht nur für das jeweilige Meßsignal, wie Dosis⇔Ladungsmessung oder Dosisleistung⇔Strommessung, das diesem über einen Trennverstärker (8) gefolgt von einem Scaling und Filterverstärker (9) zugeführt wird, sondern auch zur Wandlung diverser Parameter, die für Korrekturen und Kontrollen verwendet werden, und weiters gegebenenfalls einen DA Wandler (13) für analoge Einstellsignale als Schnittstelle zu einem Rechner, auf dessen Monitor als Bild die Bedieneinheit, die Kalibriereinheit und die Anzeigeeinheit erscheinen, enthält.

2.  Dosimetereinrichtung nach Anspruch 1 **dadurch gekennzeichnet, daß** der Rechner, der die Dosimetervorrichtung als virtuelles Instrument abbildet und auf dem die Dosimetervorrichtung bedient/verwaltet und ausgelesen wird, auch alle jene Parameter aus einer Datenbank, im Rechner oder einem Server abgelegt, on line zur Verfügung stellt bzw. in dieser abspeichert, die teils zur automatischen oder manuellen Korrektur der Meßwerte für Dosis/Dosisleistung nötig sind, teils der Ladung von Meßparametern und teils auch nur der Information des Bedienenden dienen, wobei

    die Datensätze geeignet für automatische Korrektur:

    • Eichfaktoren der letzten Eichung (26)
    • Korrekturfaktoren für unterschiedliche Strahlenqualitäten (26)
    • Korrektur des Selbstablaufes der Meßanordnung aus einer vorangegangenen Leermessung(24) oder Übernahme eines Standardwertes für gegenständliche Kammer aus der Bibliothek(21)
    • Korrektur für Luftdruck und Temperatur und eventuell Luftfeuchte(26)
    • Perturbation Faktor (26)

    die Datensätze für automatische Datenübernahme in beide Richtungen:

    • Bibliothek (21) diverser Detektoren mit deren physikalischen Parametern, wie z.B. routinemäßig verwendete Polarisationsspannung einer ausgewählten Kammer, deren Empfindlichkeit, deren typischer Selbstablauf an Stelle einer Leermessung
    • Übernahme von Meßparametern (22) und diversen Einstellungen
    • Speicherung von Meßparametereinstellung (28) zwecks Wiederholung
    • kontinuierliche Mitschrift (27), genannt log-file, einer Dosis/Dosisleistungsmessung zwecks Dokumentation, wobei im Rechner durch Zeitinkremente aus der Dosismessung die jeweilige Dosisleistung, und umgekehrt durch Integration der Dosisleistungsmessung die jeweilige Dosis errechnet werden kann.

    die Datensätze, die der Information dienen:

    • Bibliothek über Vorgeschichte und Reparaturen der abgespeicherten Detektoren
    • Information über erforderliche Nacheichtermine und Daten zur Qualitätssicherung
    • Verknüpfung von Patientendaten mit Bestrahlungsdaten und nötigen Log-Bucheintragungen
    • diverse Meldungen über Fehlfunktionen

    sind.

3.  Dosimetervorrichtung nach Anspruch 1 oder 2, **dadurch gekennzeichnet, daß** zur Überprüfung der richtigen Funktion des AD-Wandlers diese auch eine Referenzspannungsquelle (11) enthält, die aus der Stromversorgung des Dosimeters gespeist und vom AD-Wandler abgefragt wird, wodurch sowohl Stromversorgung als auch Funktion des AD-Wandlers kontrolliert werden, und, nur wenn die digitale Konversion innerhalb vorgegebener Grenzen, die im Rechner abgespeichert sind, liegt, wird ein Meßwert Dosis/Dosisleistung akzeptiert, andernfalls wird eine Fehlermeldung in einem Bildschirmfenster ausgegeben.

4.  Dosimetervorrichtung nach Anspruch 1 oder 2, **dadurch gekennzeichnet, daß** zur Erzeugung der für Ionisationskammern oder gegebenenfalls Festkörperdetektoren nötigen Polarisationspannung ein Spannungsgenerator (12) verwendet wird, der sich auf einen DA-Wandler (13) als einstellbare Referenzspannung bezieht, wobei die Polarisationsspannung durch einen Soll/Istwert-Vergleich stabilisiert wird, indem diese nach einer Teilung durch "n" mittels eines hochohmigen Spannungsteilers/ scaling amplifiers (17), der auch eine Impedanzwandlung vornehmen kann, mit der am DA-Wandler durch Eingabe eines numerischen Wertes, eingegeben mittels Tastatur oder Mausbalken, eingestellten Spannung verglich wird und ein eventuelles Differenzsignal die Regelung vornimmt, der dadurch seinerseits den Polarisationspannungsgenerator (12), z.B. bestehend aus Leistungstreiber, der aus einem Oszillator gesteuert wird, amplitudenregelt, wodurch die Polarisationsspannung immer auf das "n"-fache der am DA-Wandler eingestellten Spannung stabilisiert wird.

5.  Dosimetervorrichtung nach Anspruch 1 oder 2 oder 4, **dadurch gekennzeichnet, daß** durch ein Signal (19) aus einem digitalen I/O (4) die Polarisationsspannung durch einen Umschalter (16) mit Ausführungsvarianten a, b oder c umpolbar sein soll, wobei bei einer Umpolung die durch "n" geteilte Polarisationsspannung entweder:

    a) mit einer Spannung gleicher Polarität aus einem bipolaren DA-Wandler (13) verglichen wird

oder bei einer Differenzbildung mit einem unipolarem DA-Wandler (13)

b) zwischen dem scaling amplifier ( output 17) und dem Differenzbildner (15) mit dem Referenzsignal aus dem DA-Wandler (13) je nach Polarität keine oder eine Phasenumkehrstufe samt nötigem Umschalter eingefügt wird.

oder:

c) ebendort und an Stelle von b) eine analoge Absolutwertschaltung verwendet wird,

und durch Verwendung eines Signals (8) aus einem digitalen I/O (4) zusammen mit einer Umschalteinrichtung (7) sowohl ein Betrieb für grounded input als auch flaoting input durch entsprechende Erdung bzw. Einspeisung der Spannung ermöglicht wird, wobei der numerische Wert, der zwecks Einstellung der Polarisationsspannung in den DA-Wandler (13) eingegeben werden kann, mit der nominellen Polarisationsspannung für eine ausgewählte Ionisationskammer, die in der Bibliothek (21) gelagert ist, verglichen wird und ein vorgegebenes Minimum, üblicherweise 1/8, nicht unterschreiten darf, ansonsten er nicht akzeptiert und eine entsprechende Meldung in einem Bildschirmfenster ausgegeben wird.

6.  Dosimetervorrichtung nach Anspruch 4, **dadurch gekennzeichnet, daß** der AD-Wandler (10) die durch "n" geteilte Polarisationspannung am Ausgang des Spannungsteilers (17), d.h. die Spannung, die man auch zum Vergleich mit dem DA-Wandler heranzieht, abfragt und der digitale Wert am Display numerisch angezeigt wird, wobei zwischen positiver und negativer Polarisationsspannung unterschieden werden kann, und dieser digitale Wert mit jenem digitalen Wert, der den DA-Wandler (13) veranlaßt eine einstellbare Referenzspannung zu produzieren, verglichen wird, wobei nur bei Einhaltung von im Rechner eingegebener Fehlergrenzen ein Meßwert für Dosis/Dosisleistung des Dosimeters akzeptiert, andernfalls eine diesbezügliche Fehlermeldung in einem Fenster ausgegeben wird.

7.  Dosimetervorrichtung nach Anspruch 1 oder 2 oder 4, **dadurch gekennzeichnet, daß** der Eingangsteil des Meßverstärkers samt Detektor durch einen Isolationsverstärker (8) von der übrigen Meßeletronik potentialmäßig getrennt wird, damit die Ionisationskammer oder gegebenenfalls der Festkörperdetektor am Eingang (1) des Dosimeters (2) sowohl mit "grounded input" als auch mit " floating input", gesteuert durch einen Umschalter (7) aus einem Signal (18) eines digitalen I/O (4), betrieben werden kann, wofür für den Eingangsteil eine eigene und isolierte Stromversorgung, wie z.B: DC/DC Konverter, nötig ist und eine Signalisolation für die Steuersignale für Meßbereiche der Dosis und Dosisleistungsmessung (5) und die Nullstellung (6) aus dem digitalen I/O (4) zwecks Potentialtrennung erfolgt.

8.  Dosimetervorrichtung laut Anspruch 7, **dadurch gekennzeichnet, daß** bei einer Ausführung der Dosimetervorrichtung nur für "grounded input", die Umschalteinrichtung (7), die galvanische Trennung der Eingangsstufe durch eine eigene und isolierte Stromversorgung, wie z.B. DC/DC Konverter, und Signalisolation für die Steuerung der Signale (5) und (6) aus dem digitalen I/O (4) als auch der Isolationsverstärker (8) entfällt.

9.  Dosimetervorrichtung nach Anspruch 1 oder 2 **dadurch gekennzeichnet, daß** an Stelle der Eingangstufe (2) ein Integratorbaustein (32) mit Schalteingängen und Verstärkerkreisen verwendet wird, der durch Beschaltung mit FeedBack Elementen wie in Anspruch 1) angegeben, für Dosis⇔Ladungsmessung/Dosisleistung⇔Strommessung geschaltet werden kann, wobei auch eine Vielzahl, z.B. 16 solcher Eingänge(31) via einer Vielzahl von Integratorbausteinen(32) samt Scaling/Rauschfilterverstärkern (9) vom AD Wandler abgefragt, oder auch durch ein digitales I/O Signal(34) gesteuert, eine AD Wandler Abfrage der Referenzspannungsquelle vorbehalten werden kann und weiters durch ein Signal(33) für Start/Stop eine Abfragesteuerung vorgesehen ist.

10. Dosimetervorrichtung nach Anspruch 1 oder 2 **dadurch gekennzeichnet, daß** dem AD-Wandler auch jene Signale zugeführt werden können, die für die numerische Berechnung nötiger Korrekturwerte verwendet werden, die dann im Rechner den Meßwert für Dosis/Dosisleistung entsprechend korrigieren, wobei diese Signale aus Sensoren für Luftdruck, Temperatur und eventuell Luftfeuchte bezogen werden können.

**Claims**

1.  A dosemeter device for measurement of ionising radiation using at least one sensor, in form of an ionisation chamber or solid state detector, with measurement electronics consisting of an input amplifier (2), connected to subject sensor, feed back elements (3) for the signals to be measured, as well as an operating and control unit, a calibration unit and a display device, featuring a dosemeter that can be used together with a computer and a software package and this configuration allows for being operated as a virtuell instrument, where the dosemeter contains an A/D converter (10) including multiplexer, not only for the prevailing measurement signal, as there is dose⇔charge measurement or dose rate⇔current measurement, being fed into an isolation amplifier (8) followed by a scaling and filter amplifier (9), but as well for conversion of signals derived from other parameters, being used for correction and control and furthermore, in case necessary, a D/A converter (13) used as an interface for input of analogue signals to the computer showing at its display device the operating unit, the calibration unit and the dosemeter readings.

2.  A dosemeter device according to claim 1 **characterized by** the feature, that the computer showing the dosemeter as a virtuell instrument, enables the dosemeter to be operated/administrated and read out, provides access to parameters, stored in a data base in the computer or server, as being necessary for automatic or manual correction of readings of dose or dose rate, or for entering of measurement parameters, or for the information of the operator only as well.
    data sets suitable for automatic correction:

    *   recent standardisation by standardisation body (26)
    *   correction for different radiation qualities (26)
    *   correction for leakage current according to recent measurement (24) or application of a value for leakage current covered by the chamber library (21)
    *   correction for barometric pressure, air temperature and humidity (26)
    *   entering of pertubation factors (26)

    data sets for automatic data transfer in both directions:

    *   library (21) of detectors with their physical parameters, as for example routinely used polarisation voltage of the selected chamber, chamber's sensitivity, typical leakage current instead of an actual leakage current measurement
    *   adoption of measurement parameters (22) and different settings
    *   storage of settings for reproduction
    *   continuous log file recording (27) of dose/dose rate measurement for purpose of documentation where the dose rate can be calculated from the dose by application of time increments in the computer and the dose can be calculated by integrating the time increments of the dose rate.

    Data sets serving the information only:

    *   library of the history and repairs of chambers if stored in the data base

    *   information regarding necessary standardisation and quality assurance inspections
    *   correlation between patient data, delivered radiation and log book recordings
    *   different notations of malfunctions

3.  dosemeter according to claim 1 or 2, featuring a reference voltage source (11) being fed from the dosemeter's power supply and read out by the A/D converter monitoring the correct function of the A/D converter and the power supply as well, and, only if the reading of the A/D converter is within specified limits, a reading for dose or dose rate will be accepted, otherwise an error message will be displayed on screen.

4.  dosemeter according to claim 1 or 2 **characterized by** the feature, that for the production of polarisation voltage, used for the ionisation chamber, or in case necessary for solid state detectors, the voltage generator (12) is referenced against the output of a D/A converter (13) serving as the adjustable reference source, where the produced voltage is stabilised by a set point comparison applying a division by "n" by means of a high impedance voltage divider/scaling amplifier (17) providing an impedance conversion as well, being compared against the output of the D/A converter controlled by the numerical value entered on the keyboard or adjusted by mouse bar. The difference signal controls the amplitude of a power driver, fed by an oscillator, in a way that the polarisation voltage stabilizes at the "n-fold" of the output voltage being set at the D/A converter.

5.  dosemeter according to claim 1 or 2 or 4 **characterized by** the feature, that the polarisation voltage should be made reversible by means of a switch (16) by command (19) derived from a digital I/O (4) in a way described in versions a), b) or c) where the divided by "n" voltage will be:

    a) compared to the output of a bipolar D/A converter (13)
    or in case the difference to an unipolar D/A converter (13) will be applied
    b) between scaling amplifier ( output 17) and the comparator against the reference signal derived from the A/D converter (13) depending of the desired polarity, a polarity inverter together with a polarity switch
    or:
    c) at the same place as b) an "absolute value" circuit can be applied.

    and by command of signal (18) derived from the digital I/O (4) together with the switch (7) the use in grounded input respectively floating input configuration by means of suitable grounding and feeding of voltage is possible, where the numerical value commanding the D/A converter (13) and defining the polarisation voltage will be compared to the nominal polarisation voltage for the selected chamber, as stored in the library (21), and should not be less than 1/8 that value, otherwise subject setting will not be accepted and an error message displayed on the screen.

6. dosemeter according to claim 4 **characterized by** applying the A/D converter (10) for conversion of the "n-divided" voltage at the output of voltage divider (17) being used for comparison against the D/A output voltage and the digital value of this reading will be shown on the display, showing the polarity of polarisation voltage as well. The digital reading will be compared against the digital input to the D/A converter (13) and if the difference between these two is within predetermined limits a reading for dose or dose rate will be accepted, otherwise an error message will be displayed on screen.

7. dosemeter according to claim 1 or 2 or 4 **characterized by** applying an isolation amplifier (8) for galvanic separation of the input amplifier and the detector from the other parts of the electronics in order to allow isolation of the ionisation chamber or solid state detector at the input (1) of the dosemeter (2) enabling "grounded input" as well as "floating input" configuration produced by switch (7) and being commanded by signal (18) derived from the digital I/O (4) requiring an isolated power supply, for example DC/DC converter and a signal isolation for the selection of measuring range of dose and dose rate (5) respectively as well as for commanding zero setting (6) and signals coming from the digital I/O (4).

8. dosemeter according to claim 7 characterized for use in " grounded input only" configuration, the switch (7), the galvanic separation of the input amplifier, as for example by means of a DC/DC converter and the signal isolation for signals (5) and (6) derived from the digital I/O (4) as well as the isolation amplifier can be avoided.

9. dosemeter according to claim 1 or 2 using instead of the input circuit ( 2) an integrator circuit (32) providing integration amplifiers and inputs for switches as well, can be configured by means of feed back elements for measuring dose⇔charge measurement/dose rate⇔current measurement where a multiple, as for example 16-fold, of inputs (31) by means of a multiple of integrator circuits followed by scaling amplifiers/noise filter amplifiers (9) can be interrogated by an A/D converter commanded by a digital I/O signal (34), whereby one A/D converter request can be reserved for the reference source and furthermore by means of signal (33) a start/stop of the interrogation can be provided.

10. dosemeter according to claim 1 or 2 **characterised by** the possibility of feeding signals into the A/D converter used for the numerical calculations producing the necessary correction factors applicable to the dose/dose rate readings, as there are signals coming from sensors for barometric pressure, temperature and eventually air humidity.

## Revendications

1. Une installation de dosimètre pour mesurer le rayonnement ionisant en employant au moins un palpeur sous forme d'une chambre d'ionisation ou d'un détecteur de corps solide, avec une électronique de mesurage se composant d'un amplificateur d'entrée (2) relié avec le palpeur mentionné, des éléments de feed-back (3) pour les signaux à mesurer, équipée également d'une unité de service et de commande, d'une installation de calibrage et de signalisation marquée par le fait que ce dosimètre peut être utilisé simultanément avec un ordinateur et avec le logiciel nécessaire comme instrument virtuel qui permet cette réalisation; dans ce cas, le dosimètre contient un convertisseur AD (10) avec un dispositif multiplex non seulement pour le signal de mesure en question - comme p.ex. le mesurage de la dose⇔charge ou le mesurage de la dose instantanée⇔du courant - qui est transféré par un ampli-séparateur (8) suivi d'un amplificateur échelle et d'un amplificateur filtre de souffle(9) qui sont également employés pour la conversion d'autres paramètres utilisés pour la correction et le contrôle; en cas nécessaire, il contient également un convertisseur AD (13) servant d'interface pour l'entrée de signaux analogues dans un ordinateur qui montre sur son écran l'unité de service, l'unité de calibrage et l'unité de signalisation.

2. Une installation de dosimètre selon la revendication 1 est **caractérisée par le fait que** l'ordinateur qui montre cette installation de dosimètre comme instrument virtuel permet de la commander/administrer et de la lire; il permet aussi l'accès à tous les paramètres enregistrés dans une banque de données, dans un ordinateur ou dans un serveur, il les tient aussi à disposition on-line et peut également les enregistrer dans cette banque de données; ces paramètres peuvent être nécessaires pour corriger automatiquement ou manuellement des valeurs mesurées pour la dose/la dose instantanée, pour charger les paramètres de mesurage ou ils peuvent informer tout simplement leur utilisateur.
Les ensembles de données peuvent corriger automatiquement ce qui suit:

- les facteurs de calibrage du dernier étalonnage (26)
- les facteurs de correction pour les qualités différentes de rayonnement (26)
- la fuite de courant de la configuration de mesure à l'aide d'un dernier mesurage à vide (24) ou l'on s'en sert comme valeur de référence dans la bibliothèque (21) pour la chambre en question
- la pression de l'air, de la température ou éventuellement de l'humidité d'air (26)
- l'entrée de facteurs de perturbation (26)

Les ensembles de données pour le traitement automatique de données dans les deux sens sont les suivants:

- la bibliothèque (21) de détecteurs divers avec leurs paramètres physiques comme p.- ex. l'emploi routinier de la tension de polarisation d'une chambre sélectionnée tout comme leur sensibilité et leur fuite de courant typique au lieu d'un mesurage à vide
- l'utilisation de paramètres de mesurage (22) et de réglages divers
- l'enregistrement d'un positionnement de paramètres pour pouvoir les utiliser à plusieurs reprises
- le mesurage d'une dose/d'une dose instantanée est continuellement noté dans le journal appelé «log-file» pour pouvoir établir une documentation; ce système permet de calculer dans l'ordinateur la dose a partir de la dose instantanée à l'aide des incréments de temps; et vice versa, il est possible de calculer la dose à partir de l'intégration du mesurage de la dose instantenée.

Les ensembles de données servant à l'information sont les suivants:

- la bibliothèque sur l'histoire et les réparations concernant les détecteurs enregistrés
- l'information sur les délais de réétalonnages nécessaires et sur toutes les données assurant la qualité
- la corrélation des données sur les patients y compris les données d'une radiothérapie avec tous les enregistrements faits dans le journal
- les informations diverses sur des messages de panne

3.  L'installation de dosimètre selon la revendication 1 ou 2 est **caractérisée par le fait qu'**elle contient aussi une source de tension de référence (11) pour vérifier la fonction correcte du convertisseur AD; cette source est nourrie par l'alimentation du courant pour le dosimètre et est interrogée par le convertisseur AD ce qui assure le contrôle de l'alimentation en courant tout comme de la fonction du convertisseur AD; si cette vérification s'est avérée comme correcte à l'intérieur des limites données et enregistrées par l'ordinateur, une valeur de mesure pour la dose/la dose instantanée est acceptée; sinon, un message de panne apparaît sur un écran de signalisation.

4.  L'installation de dosimètre selon la revendication 1 ou 2 est **caractérisée par le fait qu'**on utilise un générateur de tension (12) pour produire la tension de polarisation nécessaire pour les chambres de ionisation ou parfois pour les détecteurs à corps solide; ce générateur de tension se réfère à un convertisseur DA (13) disant la tension de référence réglable; en même temps, la tension de polarisation est stabilisée par la comparaison entre la valeur réelle et la valeur de consigne; cette tension de polarisation est divisée par «n» à l'aide d'un diviseur de tension fort résistant /amplificateur d'échelle (17) qui peut également procéder à une conversion d'impédance que l'on peut comparer avec la tension produite par le convertisseur DA en entrant sur le clavier ou à l'aide du «mouse bar» une valeur numérique. Une signalisation éventuelle de différence contrôle l'amplitude d'un amplificateur de puissance étant commandé par un oscillateur de sorte que la tension de polarisation se stabilise toujours à une valeur d'un multiple de «n» de la tension qui a été réglée au convertisseur DA.

5.  L'installation de dosimètre selon la revendication 1 ou 2 ou 4 est **caractérisée par le fait que** la polarité de la tension de polarisation doit être inversée à l'aide d'un interrupteur (16) fabriqué selon la version a), b) ou c) à l'aide d'une signalisation (19) venant d'une entrée/sortie digitale (4); la tension de polarisation divisée par «n» après l'inversion pourra être traitée comme suit:

    a) soit elle est comparée avec une tension de la même polarité venant d'un convertisseur DA bipolaire (13)

    soit - en cas d'une différence - elle est comparée avec un convertisseur DA unipolaire (13)

    b) selon la polarité désirée, on peut insérer une inversion des phases avec l'interrupteur nécessaire entre l'amplificateur d'échelle (sortie 17) et la formation de différence (13) avec la signalisation de référence venant du convertisseur DA unipolaire (13) soit

    c) au même endroit de b), on peut employer un circuit de valeur absolue;

    ainsi, il est possible d'assurer un service pour «grounded input» tout comme pour «floating input» en employant une signalisation (18) venant de l'entrée/sortie digitale (4) avec un inverseur appropriée, une prise de terre adéquate et après avoir assuré l'alimentation en tension; dans ce cas, on compare la valeur numérique - qui peut être entrée dans le convertisseur DA (13) pour régler la tension de polarisation - avec la tension de polarisation nominale pour une chambre de ionisation sélectionnée tout en évitant de dépasser vers le bas un minimum prescrit (normalement 1/8$^{ième}$); sinon, cette valeur n'est pas acceptée et un message correspondant apparaît sur l'écran.

6. L'installation de dosimètre selon la revendication 4 est **caractérisée par le fait que** le convertisseur AD (10) demande la tension de polarisation divisée par «n» à la sortie du diviseur de tension (17) - (il s'agit de la même tension qui sert de base pour la comparaison avec le convertisseur DA) et que la valeur digitale numérique apparaît sur l'écran; dans ce contexte, on peut faire la différence entre une tension de polarisation positive ou négative; la valeur digitale du diviseur de tension est comparée avec la valeur digitale qui incite le convertisseur DA (13) à produire une tension de référence réglable; seulement en respectant les limites d'erreur entrées dans l'ordinateur, une valeur de mesure pour la dose /la dose instantanée est acceptée, sinon, un message de panne respectif apparaît sur l'écran.

7. L'installation de dosimètre selon la revendication 1 ou 2 ou 4 est **caractérisée par le fait que** la partie d'entrée de l'amplificateur de mesure avec le détecteur est séparée potentiellement par un amplificateur d'isolement (8) du reste de l'électronique de mesure afin de pouvoir actionner la chambre d'ionisation ou le détecteur à corps solide situé à l'entrée (1) du dosimètre (2) avec «grounded input» ou avec «floating input»; la commande est effectuée à l'aide d'un interrupteur (7) à la suite d'une signalisation (18) d'une entrée/sortie digitale (4); ici, la partie d'entrée nécessite sa propre alimentation séparée comme p. ex. un convertisseur DC/DC et une signalisation isolée pour les signaux de commande concernant le mesurage de la dose et de la dose instantanée(5) et pour la remise à zéro (6); toutes ces commandes sont isolées et assurées par l'entrée/sortie digitale (4).

8. L'installation de dosimètre selon la revendication 4 est **caractérisée par le fait que** si elle est exécutée seulement pour la version avec «grounded input», il n'est pas nécessaire de prévoir les installations suivantes: un interrupteur (7), une séparation galvanique de l'amplificateur d'entrée par une propre alimentation isolée comme p. ex. un convertisseur DC/DC, une signalisation isolée pour la commande des signaux (5) et (6) venant de l'entrée/sortie digitale (4) tout comme un amplificateur d'isolement (8).

9. L'installation de dosimètre selon la revendication 1 ou 2 est **caractérisée par le fait qu'**on emploie au lieu d'un amplificateur d'entrée (2) un élément intégrateur (32) avec circuits d'entrée et circuits amplificateurs qui - selon revendication 1 - à l'aide d'éléments de feed-back peut être mis en circuit pour le mesurage de la dose⇔charge ou le mesurage de la dose instantanée⇔du courant; dans ce cas, un grand nombre (p. ex. un multiple de 16) de telles entrées (31) via un grand nombre d'éléments intégrateurs (32) y compris un amplificateur d' échelle/ des filtres de souffle renforcés (9) peuvent être interrogés par le convertisseur AD; il est également possible de prévoir une interrogation de la source de la tension de référence commandée par une signalisation d'entrée/sortie digitale (34); une commande de demande à l'aide d'une signalisation (33) pour démarrage/arrêt est aussi prévu.

10. L'installation de dosimètre selon la revendication 1 ou 2 est **caractérisée par le fait qu'**on peut alimenter le convertisseur AD aussi avec tous les signaux qui sont employés pour le calcul numérique des valeurs de correction nécessaires qui corrigent conformément dans l'ordinateur la valeur de mesure pour la dose/la dose instantanée; dans ce cas, les signaux peuvent être gagnés par les palpeurs pour la pression d'air, la température ou éventuellement pour l'humidité d'air.

## FIG.1

Feed-Back C/R = Meßparameter Dosis/Dosisleistung
Feed-Back Schalter = Nullstellung
floating input/grounded input
Polarität Polarisationsspannung

FIG.2

Auswahl der Meßparameter, Polarisationsspannung, Start/Stop/Reset

Elektronik
ADC, DAC, digital I/O — 10'

22

Meßwerte
Rohdaten

optional

25

Kammerdaten
Empfindlichkeit, Korrekturfaktoren

21

Permanente
Speicherung

30

weitere
Auswertung — 29

26

Programmlogik

Protokollfile

27

Parameter:
Luftdruck,
Temperatur, Eichfaktor,
Strahlenqualität

Einstellungen
Protokollfile

28

Darstellung am Bildschirm
von virtuellem Instrument,
Meßparametern, Meßdaten,
Informationen und Protokoll-File

23

Leckstrom
Messung und
Korrektur

24

Benutzer
Eingabemedien — 20

14

FIG.3

Meßparameter Dosis/Dosisleistung
Nullstellung
Start/Stop
Detektor 16 oder Referenz

FIG. 4

Auswahl der Meßparameter
Start/Stop/Reset

22'

Elektronik
ADC, digital I/O

10"

Meßwerte
Rohdaten

25

optional

Detektordaten
Korrekturfaktoren

21'

Permanente
Speicherung

30

weitere
Auswertung

29

27

Parameter:
Temperatur, Eichfaktor,
Strahlenqualität

26

Programmlogik

Protokollfile

28

Einstellungen
Protokollfile

Darstellung am Bildschirm
von virtuellem Instrument,
Meßparametern, Meßdaten,
Informationen und Protokoll-File

Leckstrom
Messung und
Korrektur

24

23

Benutzer
Eingabemedien

20